# EUROPÄISCHE PATENTSCHRIFT

(11) **EP 3 466 662 B1**
(45) Veröffentlichungstag und Bekanntmachung des Hinweises auf die Patenterteilung: **26.02.2020**
(21) Anmeldenummer: 17195371.4
(22) Anmeldetag: 09.10.2017
(51) Int. Cl.: B30B 1/26, B21J 9/18, B30B 15/26, B30B 15/28, B30B 15/14, F16C 3/28, F16C 13/02, F16C 41/00

(54) **SICHERE STEUERUNGSVORRICHTUNG UND VERFAHREN ZUM VERSTELLEN DER HUBLÄNGE EINER EXZENTERPRESSE**
SECURE CONTROL DEVICE AND METHOD FOR ADJUSTING THE STROKE LENGTH OF AN ECCENTRIC PRESS
DISPOSITIF DE COMMANDE SÉCURISÉ ET PROCÉDÉ DE RÉGLAGE DE LA LONGUEUR DE COURSE D'UNE PRESSE EXCENTRIQUE

(43) Veröffentlichungstag der Anmeldung: 10.04.2019
(73) Patentinhaber: SICK AG, 79183 Waldkirch (DE)
(72) Erfinder: Ams, Mathias, 79211 Denzlingen (DE); Moddemann, Jörg, 79132 Emmendingen (DE); Merkler, Fabian, 79211 Denzlingen (DE)

(56) Entgegenhaltungen:
- EP-A1- 1 903 645
- CN-A- 101 201 610
- CN-A- 102 431 207
- CN-B- 103 182 796
- CN-U- 202 986 165
- DE-A1- 3 345 464
- DE-A1- 3 421 184
- DE-A1- 4 129 708
- DE-A1- 4 307 535
- DE-U1- 29 906 673
- JP-A- H08 112 697
- JP-A- H10 249 596

## Beschreibung

Die Erfindung betrifft eine Steuerungsvorrichtung und ein Verfahren zum Verstellen der Hublänge einer Exzenterpresse nach dem Oberbegriff von Anspruch 1 beziehungsweise 12.

Pressen werden überall dort eingesetzt, wo Bleche geformt werden, typischerweise im Automobilbereich oder bei Zulieferern, etwa von Gehäuseteilen wie denen von Waschmaschinen. Im Betrieb wird das Material von vorne zugeführt, und dieser Bereich ist durch ein Lichtgitter und manchmal mechanisch abgesichert. Arbeitet die Presse automatisch, so sorgt die Absicherung dafür, dass keine Person in gefährliche Nähe kommt. Im manuellen Betrieb legt eine Bedienperson das Material ein und startet den Pressvorgang. Während der Abwärtsbewegung stoppt das Lichtgitter, sobald es einen Eingriff erkennt. In der ungefährlichen Aufwärtsbewegung kann das Lichtgitter deaktiviert sein (Muting). Eine besondere manuelle Betriebsart ist das Einrichten der Presse, wo die Steuerung durch eine sichere Zweihandschaltung erfolgt, während die sonstigen Absicherungen deaktiviert sind.

Eine Exzenterpresse wird üblicherweise über einen Motor und ein Schwungrad angetrieben, wobei eine kombinierte Kupplung und Bremse mit pneumatischer Steuerung die Exzenterpresse bewegt und anhält. Der Stößel der Exzenterpresse wird über eine Pleuelstange von einem Exzentersystem auf und ab bewegt, dessen Exzenterwelle über ein Getriebe mit dem Schwungrad verbunden ist.

Die Exzenterwelle sitzt in einer Exzenterbuchse. Während des Betriebs ist die Verbindung formschlüssig, und das Exzentersystem kann als Einheit angesehen werden. Um die Hublänge der Exzenterpresse zu verstellen, wird die Exzenterwelle pneumatisch oder hydraulisch aus der Exzenterbuchse gelöst und dagegen verdreht, so dass sich die Länge des Exzentersystems verändert. Anschließend wird das Exzentersystem wieder verbunden, wobei dies wegen des Formschlusses nur in bestimmten Winkelschritten möglich ist.

In einem Presszyklus gibt es drei für die Pressensteuerung und die Sicherungsmaßnahmen relevante Schaltpunkte. Am oberen Totpunkt (TDC, Top Dead Center) wird zumindest im manuellen Betrieb die Bewegung gestoppt, bevor ein neuer Hub eingeleitet wird. Die Presse muss dann spätestens an einem Nachlaufpunkt (SCC) angehalten haben, andernfalls liegt ein Fehler im Antriebsstrang vor, und sie muss sicherheitshalber abgeschaltet werden. An einem unteren Totpunkt (BDC, Bottom Dead Center) ist die eigentliche Arbeitsbewegung abgeschlossen, für die sich anschließende Aufwärtsbewegung kann die Schutzeinrichtung beziehungsweise das Lichtgitter deaktiviert werden.

Diese drei Schaltpunkt werden herkömmlich durch ein mechanisches Nockenschaltwerk erzeugt. Darin dreht sich eine Nockenscheibe mit der Exzenterwelle mit, dessen Nocken in entsprechenden Drehstellungen Kontaktschalter auslösen.

Wird nun die Hublänge der Presse verstellt, so verändern sich damit auch die Positionen der drei Schaltpunkte BDC, SCC und TDC. Das Nockenschaltwerk muss deshalb vom Maschinenbediener nachgestellt werden. Das ist ein mühsamer händischer Prozess, zumal das Nockenschaltwerk regelmäßig nur schwer nach Aufstieg über Leitern zum oberen Teil der Presse oder gar Abnehmen von Gehäuseteilen zugänglich ist. Außerdem liegt das Nachstellen der Schaltpunkte komplett in der Verantwortung des Maschinenbedieners ohne unterstützende Werkzeuge für funktionale Sicherheit. Insgesamt ist das Vorgehen fehlerträchtig, zeitaufwändig, unproduktiv und birgt Unfallgefahren.

Aus der DE 34 21 184 A1 ist eine Steuerungsvorrichtung gemäss dem Oberbegriff des Anspruchs 1 und ein Verfahren gemäss dem Oberbegriff des Anspruchs 12 zur Hubverstellung an Exzenterpressen bekannt. Dazu wird die Verbindung zwischen innerem und äußerem Exzenter gelöst und dann der innere Exzenter durch den Antriebsmotor verdreht. Ein Winkelgeber bestimmt jeweils die aktuelle Winkelstellung und schaltet den Antriebsmotor bei einem zu dem gewünschten neuen Hub gespeicherten Bremswinkel ab. Da der Antriebsmotor mit normaler Arbeitsbewegung und nicht lediglich in einem Schleichgang betrieben wird, ist der Nachlauf zu berücksichtigen. Deshalb wird die erreichte Ist-Winkelstellung mit einer Soll-Winkelstellung verglichen, und bei fehlender Übereinstimmung wird aus der Abweichung ein neuer Bremswinkel bestimmt und das Verfahren bis zum Erreichen der Soll-Winkelstellung wiederholt. Die Exzenterpresse kann ferner ein Nockenschaltwerk aufweisen, das nach der Hubverstellung neu justiert werden muss. Dazu wird das Schaltwerk vor Beginn der Hubverstellung von der Exzenterwelle entkoppelt und die Exzenterwelle nach vollendeter Hubverstellung gegen das Schaltwerk um den Winkel, um welchen der innere Exzenter gegenüber dem äußeren Exzenter verdreht wurde, sowie um einen aus der durchgeführten Hubverstellung berechneten Totpunkt-Korrekturwinkel zurückgedreht.

Es gibt im Stand der Technik auch den Vorschlag, das mechanische Nockenschaltwerk durch einen Drehgeber zu ersetzen, der die Drehstellung der Exzenterwelle überwacht und Schaltsignale in vorgegebenen Drehstellungen erzeugt. Es ist dabei aber immer noch erforderlich, nach einem Verstellen der Hublänge die Schaltpunkte neu zu setzen. Dafür muss die Presse manuell in eine zuvor definierte Bestätigungsposition gefahren werden, um dort den jeweiligen Schaltpunkt beispielsweise durch Knopfdruck einzulernen. Meist wird hierzu der Schaltpunkt TDC oder BDC gewählt. Somit ist es zwar gelungen, das mechanische Nockenschaltwerk zu ersetzen. Das Vorgehen bleibt aber mühsam, und weiterhin liegt die Sicherheit allein in der Hand des Maschinenbedieners. Es ist daher Aufgabe der Erfindung, die Überwachung einer Exzenterpresse zu verbessern

Diese Aufgabe wird durch eine Steuerungsvorrichtung und ein Verfahren zum Verstellen der Hublänge einer Exzenterpresse nach Anspruch 1 beziehungsweise 12 gelöst. Die Exzenterpresse weist wie einleitend beschrieben ein Exzentersystem mit einer Exzenterwelle und einer Exzenterbuchse auf, welches über eine Pleuelstange einen Stößel auf und ab bewegt. Die Exzenterwelle kann zum Verstellen der Hublänge aus der Exzenterbuchse gelöst und dagegen verdreht werden. Eine Steuerungslogik erzeugt an mindestens einem kritischen Punkt innerhalb eines Zyklus' der Pressenbewegung ein Schaltsignal. Dies erfolgt nicht über ein mechanisches Nockenschaltwerk, sondern elektronisch mit Hilfe eines Drehgebers, welcher die Drehbewegung der Exzenterwelle überwacht. Die Erfindung geht nun von dem Grundgedanken aus, den Schaltpunkt nach einem Verstellen der Hublänge automatisch nachzuführen. Dabei wird die erste Drehstellung automatisch neu bestimmt, um die Veränderungen zu kompensieren, die durch das Verdrehen der Exzenterwelle gegen die Exzenterbuchse auftreten.

Die Erfindung hat den Vorteil, dass das mechanische Nockenschaltwerk durch eine Kombination aus sicherer Sensorik und Steuerungslogik beziehungsweise Prozesssignale ersetzt ist. Dieses quasi virtuelle Nockenschaltwerk wird erfindungsgemäß ohne manuelle Eingriffe mit der Hubverstellung nachgeführt. Dadurch wird die Produktivität und Ergonomie der Anlage gesteigert, und zugleich sind Fehlbedienung und andere Unfallgefahren beseitigt. Die erfindungsgemäße Lösung ist dabei auch noch kostengünstiger als andere Systeme der automatischen Hubverstellung.

Die Steuerungslogik ist bevorzugt dafür ausgebildet, das erste Schaltsignal an einem unteren Totpunkt und ein zweites Schaltsignal bei einer zweiten Drehstellung an einem oberen Totpunkt der Exzenterpresse zu erzeugen. Somit werden die beiden einleitend erläuterten Schaltpunkte TDC, wo die Exzenterpresse vor einem neuen Hub anhält, und BDC überwacht, wo eine zusätzliche Sicherheitsvorrichtung wie ein Lichtgitter für die Aufwärtsbewegung deaktiviert oder gemutet werden kann. Bei einer Hubverstellung werden beide Drehstellungen nachgeführt.

Die Steuerungslogik ist bevorzugt dafür ausgebildet, ein drittes Schaltsignal bei einer dritten Drehstellung an einem Nachlaufpunkt zu erzeugen. Das ist der dritte einleitend erläuterte Schaltpunkt nach dem oberen Totpunkt, an dem die Presse spätestens angehalten haben muss. Andernfalls liegt ein Fehler vor, und der weitere Betrieb der Presse wird sofort unterbunden.

Die Steuerungslogik ist bevorzugt dafür ausgebildet, die Drehstellungen relativ zueinander zu bestimmen. Dazu muss es einen absoluten Bezugspunkt geben, vorzugsweise eine der Drehstellungen wie zum Beispiel den oberen Totpunkt TDC. Dazu sind Drehstellungen oder Schaltpunkte relativ als Offsetwinkel bestimmt. Das hat den Vorteil, dass sie nicht extra nachgeführt werden müssen, sondern mit dem Bezugspunkt automatisch angepasst sind. Beispielsweise kann der Nachlaufpunkt 15° nach dem oberen Totpunkt TDC liegen, so dass der Nachlaufpunkt automatisch mit TDC nachgeführt ist.

Die Steuerungslogik weist bevorzugt eine Tabelle oder eine Rechenvorschrift auf, die möglichen Winkeln, die Exzenterwelle und Exzenterbuchse zueinander zum Verstellen der Hublänge einnehmen können, einen jeweiligen Korrekturwinkel für die erste Drehstellung zuordnet. Bei einem Verstellen der Hublänge wird so der erforderliche Korrekturwinkel bestimmt, und mit dessen Hilfe werden die Drehstellungen nachgeführt und an die neue Hublänge angepasst. Im Prinzip lässt sich der Korrekturwinkel über trigonometrische Beziehungen aus den Geometrien des Exzentersystems berechnen, und die Sicherheitsvorrichtung kann diese Rechenvorschrift verwenden. Üblicherweise gibt es aber nur vergleichsweise wenige einstellbare Hublängen, so dass es oft einfacher ist, stattdessen eine Tabelle vorzuhalten. Die Rechenvorschrift kann dann vorbereitend beispielsweise vom Pressenhersteller genutzt werden, um die Tabelle zu erzeugen. Es ist klar, dass alle Korrekturwinkel verlässlich bestimmt sein müssen, weil sonst kein sicheres Nachführen von Schaltpunkten möglich ist.

Der Encoder ist bevorzugt als sicherer Absolutdrehgeber ausgebildet. Sicher ist im Sinne von Maschinensicherheit zu verstehen, beispielsweise indem der Absolutdrehgeber der höchsten Sicherheitskategorie 4 entspricht. Sicherheit lässt sich insbesondere dadurch gewinnen, dass ein zweikanaliges Subsystem aus diversitär-redundanten Encodern eingesetzt wird, die jeweils für sich allein nicht notwendig sicher sind. Ein Inkrementalgeber genügt nicht, um die Drehstellungen für die Schaltpunkte zu bestimmen. Sofern inkrementell von einem festen Bezugspunkt gemessen wird, wäre das funktionell ein Absolutdrehgeber, sofern die notwendigen Maßnahmen ergriffen sind, dass der Anfangsbezug jederzeit richtig Berücksichtigung findet.

Die Sicherheitssteuerungsvorrichtung weist vorzugsweise einen Positionsüberwachungssensor für die Exzenterbuchse auf. Dafür kann insbesondere ein sicherer Absolutdrehgeber oder ein diversitär-redundantes Subsystem aus zwei Encodern eingesetzt werden. Die Nachführung der Schaltpunkte hängt von den Drehstellungen beider Komponenten des Exzentersystems ab, so dass auch die Position der Exzenterbuchse vorzugsweise überwacht wird.

Noch bevorzugter ist der Positionsüberwachungssensor als Sicherheitspositionsschalter ausgebildet, welcher ein Blockieren der Exzenterbuchse erkennt. Die Erkennung erfolgt vorzugsweise indirekt, indem der Positionsüberwachungssensor während der Hubverstellung aktiviert bleiben muss. Damit wird ein Verstellen der Hublänge als solches ebenso vereinfacht, wie das Nachführen der Schaltpunkte, denn ein Freiheitsgrad des Exzentersystems ist festgelegt. Damit kann die gewünschte Stellung für die neue Hublänge durch Drehen der Exzenterwelle allein erreicht werden, und beim Nachführen der Schaltpunkte muss keine Bewegung der Exzenterbuchse berücksichtigt werden.

Die Sicherheitssteuerungsvorrichtung weist bevorzugt einen Exzentertrennüberwachungssensor auf, der erkennt, ob Exzenterwelle und Exzenterbuchse voneinander gelöst sind oder nicht. Der Exzentertrennüberwachungssensor kann als kontaktloser Sicherheitsschalter ausgebildet sein, beziehungsweise es werden zwei mechanische Positionsschalter eingesetzt. Aufgrund seiner Überwachung kann das Exzentersystem sich nicht unbemerkt verstellen und ist genau dann gelöst, wenn eine Hubverstellung vorgenommen wird.

Die Steuerungslogik ist bevorzugt dafür ausgebildet zu erkennen, ob ein beim Verstellen gewählter Winkel zwischen Exzenterwelle und Exzenterbuchse zulässig ist. Die Exzenterwelle rastet nur in bestimmten Drehstellungen wieder formschlüssig in der Exzenterbuchse ein. Deshalb ist es sinnvoll zu prüfen, ob ein gewünschter oder erreichter Winkel zwischen Exzenterwelle und Exzenterbuchse überhaupt mechanisch möglich und für eine Hubverstellung vorgesehen ist. Bei einer alternativen kraftschlüssigen Verbindung von Exzenterwelle und Exzenterbuchse und stufenloser Verstellung der Hublänge entfällt diese Überprüfung.

Die Steuerungslogik ist bevorzugt dafür ausgebildet, die Hublänge automatisch zu verstellen. Somit wird der Sicherheitssteuerungsvorrichtung lediglich noch ein Steuerungsbefehl übergegeben, dass eine Hublängenverstellung durchgeführt wird, und möglicherweise die einzustellende neue Hublänge. Die Sicherheitssteuerungsvorrichtung kümmert sich dann selbsttägig sowohl um das Einstellen der neuen Hublänge als auch das Nachführen der Schaltpunkte, während die Steuerungslogik die Prozessschritte der Hubverstellung autonom abarbeitet, und an die Sicherheitssteuerung Statusinformationen übergibt. Der Vorgang der Hubverstellung beinhaltet beispielsweise das Verdrehen der Exzenterwelle beziehungsweise mit der Presse bestimmte Positionen wie den oberen Totpunkt anzufahren. Nach Abschluss des Verstellvorgangs übergibt die Sicherheitssteuerung die eingestellte Hublänge an die Steuerungslogik, hier kann eine weitere Prüfung durch den Prozess selbst erfolgen. Für das Erreichen des angestrebten Sicherheitsniveaus ist die jedoch nicht erforderlich.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Bei dem erfindungsgemäßen Verfahren wird bevorzugt zum automatischen Verstellen der Hublänge eine gewünschte Hublänge vorgegeben und daraufhin die Exzenterwelle in dem erforderlichen Winkel gegen die Exzenterbuchse verdreht. Die gewünschte Hublänge wird vorzugsweise als eine der möglichen Stufen übergeben, in denen das Exzentersystem einrasten kann. Zugleich werden auch die Schaltpunkte nachgeführt, wobei hier keine zeitliche Abfolge festgelegt sein muss, das Nachführen kann als vorangehender, nachfolgender oder gleichzeitiger Schritt erfolgen.

Die Exzenterpresse wird bevorzugt zunächst in eine für das Verstellen der Hublänge geeignete Position bewegt. Dies ist vorzugsweise die Position, in der auch die aktuelle Hublänge eingestellt wurde. Diese Position ist über die mechanische Konstruktion der Presse definiert und in der Sicherheitssteuerung hinterlegt. Es findet in der Sicherheitssteuerung ein Vergleich statt, ob die aktuelle Position der Exzenterwelle der gespeicherten Sollposition, d.h. der aktuellen Hublängenposition entspricht. Weiterhin wird geprüft, dass sich die Exzenterbuchse ebenfalls in der erwarteten Position beziehungsweise Stellung befindet.

Die Exzenterwelle wird bevorzugt aus der Exzenterbuchse gelöst und die Exzenterbuchse blockiert, dann wird die Exzenterpresse angetrieben, bis die Exzenterwelle in dem erforderlichen Winkel gegen die Exzenterbuchse verdreht ist, und anschließend wird die Exzenterwelle wieder mit der Exzenterbuchse verbunden. Diese Schritte werden durch die Sensoren der Sicherheitsvorrichtung sicher überwacht, und die Schaltpunkte beziehungsweise Drehstellungen zum Erzeugen von Schaltsignalen werden nachgeführt.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: ein Blockschaltbild einer Exzenterpresse, deren Hublänge mittels einer Sicherheitssteuerung und angeschlossener Sensorik einschließlich Nachführen von Schaltpunkten verstellbar ist;
- Fig. 2: ein Diagramm, das die Winkel im Exzentersystem beim Verstellen der Hublänge erläutert;
- Fig. 3: ein Ablaufdiagramm für das Verstellen der Hublänge und das Nachführen der Schaltpunkte;
- Fig. 4: eine Darstellung des Exzentersystems in einer Stellung für eine erste Hublänge;
- Fig. 5: eine Darstellung des Exzentersystems in einer neuen Stellung für eine zweite Hublänge;
- Fig. 6: eine Darstellung des Exzentersystems und der Schaltpunkte in der Stellung für eine erste Hublänge gemäß Figur 4;
- Fig. 7: eine Darstellung des Exzentersystems und der Schaltpunkte in der neuen Stellung für eine zweite Hublänge gemäß Figur 6; und
- Fig. 8: eine Darstellung des Exzentersystems und der Schaltpunkte für drei unterschiedliche Hublängen.

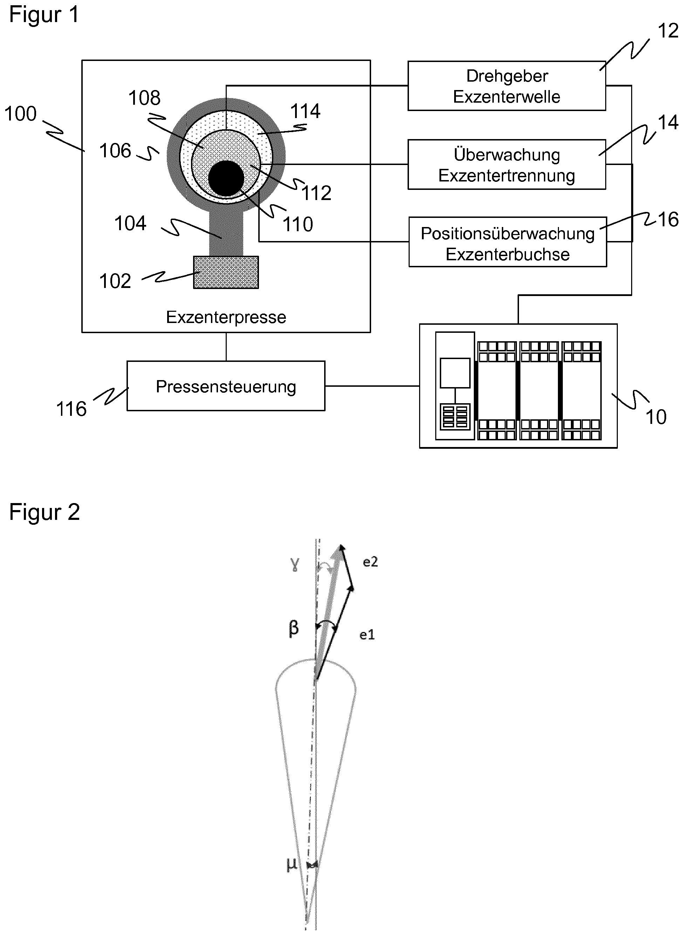

Figur 1 zeigt ein Blockschaltbild einer Exzenterpresse 100 mit einer Sicherheitssteuerung 10 zu deren Überwachung. Der Aufbau der Exzenterpresse 100 wird als bekannt vorausgesetzt, und deshalb sind zahlreiche Elemente wie Motor, Schwungrad, Getriebe, Bremse und dergleichen nicht gezeigt. Dargestellt ist lediglich eher symbolisch der Stößel 102, der über eine Pleuelstange 104 von einem Exzentersystem 106 auf und ab bewegt wird.

Das Exzentersystem 106 weist eine Exzenterwelle 108 auf, die über das nicht gezeigte Getriebe in Drehbewegung versetzt wird. Die Exzenterwelle 108 besteht genaugenommen aus der eigentlichen Welle 110, welche die Drehachse bildet und über das Getriebe bewegt wird, und einem damit verbundenen Exzenter 112, was aber im Folgenden nicht mehr unterschieden wird. Die Exzenterwelle 108 ist formschlüssig mit einer Exzenterbuchse 114 verbunden, beispielsweise über eine Verzahnung.

Um die Hublänge der Exzenterpresse 100 zu verstellen, lässt sich die Exzenterwelle 108 pneumatisch oder hydraulisch aus der Exzenterbuchse 114 lösen und dagegen verdrehen. Die Exzenterwelle 108 verrastet dann nur in bestimmten diskreten Drehstellungen erneut, so dass nur ein gestuftes Verstellen der Hublänge möglich ist. Alternativ sind auch Pressen mit Kraftschluss in ihrem Exzentersystem denkbar, die dann ein stufenloses Verstellen zulassen.

Die Abläufe der Exzenterpresse 100 werden von einer Pressensteuerung 116 gesteuert, die insbesondere in der Lage ist, die Exzenterwelle 108 in Drehbewegung zu versetzen und zu stoppen. Die Pressensteuerung 116 ist mit der Sicherheitssteuerung 10 verbunden.

Zur Überwachung der Exzenterpresse sind an die Sicherheitssteuerung 10 mehrere sichere Sensoren angeschlossen. Ein sicherer Absolutdrehgeber 12 bestimmt die jeweilige Drehstellung der Exzenterwelle 108. Während des Normalbetriebs kann das gesamte Exzentersystem 106 als eine mechanische Einheit aufgefasst werden, so dass mit der Drehstellung der Exzenterwelle 108 auch die Drehstellung der Exzenterbuchse 114 und letztlich des Stößels 102 erfasst ist. Die Sicherheitssteuerung 10 erzeugt in bestimmten Drehstellungen der Exzenterwelle 108 entsprechend bestimmten Positionen des Stößels 102 Schaltsignale. Das wird hier am Beispiel der Schaltpunkte BDC am unteren Totpunkt, TDC am oberen Totpunkt und SCC am Nachlaufpunkt beschrieben, die schon einleitend erläutert wurden. Soweit zulässig und sinnvoll, können mehr, weniger und/oder andere Schaltpunkte berücksichtigt werden. Der Absolutdrehgeber 12 in Kombination mit der Sicherheitssteuerung 10 ersetzt folglich das herkömmliche mechanische Nockenschaltwerk.

Ein Exzentertrennüberwachungssensor 14 erkennt, wann die Exzenterwelle 108 zum Verstellen der Hublänge von der Exzenterbuchse 114 gelöst ist. Beispielsweise zeigt eine steigende Flanke an, dass das Exzentersystem 106 gelöst ist, und umgekehrt eine fallende Flanke, dass das Exzentersystem 106 fest verbunden ist. Der Exzenterüberwachungssensor 14 weist beispielsweise zwei antivalente Sicherheitspositionsschalter auf.

Im gelösten Zustand des Exzentersystems 106 können Exzenterwelle 108 und Exzenterbuchse 114 unabhängig voneinander rotieren und müssen als unabhängige Einheiten betrachtet werden. Deshalb ist ein Positionsüberwachungssensor 16 für die Exzenterbuchse 114 vorgesehen. Das kann ein zweiter sicherer Absolutdrehgeber oder ein anderer Sensor sein, um die Position der Exzenterbuchse 114 sicher zu überwachen. Vorzugsweise wird aber die Exzenterbuchse 114 während einer Hubverstellung blockiert, wobei die entsprechende nicht gezeigte Blockierung ebenfalls von der Sicherheitssteuerung 10 gesteuert wird. Bei blockierter Exzenterbuchse 114 führt der weitere Antrieb der Exzenterpresse 100 dazu, dass sich die Exzenterwelle 108 gegen die feststehende Exzenterbuchse 114 verdreht. Die Exzenterbuchse 114 hat keinen eigenen Drehfreiheitsgrad, was den Verstellvorgang an sich ebenso vereinfacht, wie die erforderlichen Ansteuerungen und Nachführungen. Der Positionsüberwachungssensor 16 kann als Schalter, beispielsweise kontaktloser induktiver Sicherheitsschalter ausgebildet sein, der keine Drehstellungen der Exzenterbuchse 114 überwacht, sondern nur sicherstellt, dass sie tatsächlich blockiert ist.

Die Sicherheitssteuerung 10 hat über die Sensoren 12, 14, 16 alle erforderlichen Informationen, um die Hublänge sicher zu verstellen und die Schaltpunkte nachzuführen. Zusätzlich kann die Sicherheitssteuerung 10 auch für nicht dargestellte Sicherheitssensoren zuständig sein, etwa ein Lichtgitter, das die Materialzuführung absichert und das nach Erreichen des unteren Totpunkts bis zum oberen Totpunkt deaktiviert oder gemutet wird.

Figur 2 zeigt ein Diagramm, das die Winkel im Exzentersystem 106 beim Verstellen der Hublänge erläutert. Dabei stehen e1 für die Exzenterwelle 108 und e2 für die Exzenterbuchse 114. Um den Winkel β wird die Exzenterwelle 106 verdreht, um von der ursprünglichen zu der neuen Hublänge zu kommen. Mit y ist der Winkel bezeichnet, um den das Exzentersystem 106 von der ursprünglichen zu der neuen Hublänge verdreht ist. Das ist zugleich der Korrekturwinkel, um den die Schaltpunkte nachgeführt werden müssen. Eingezeichnet ist auch noch der Winkel µ des Stößels 102.

Wenn zur Hublängenverstellung die Exzenterbuchse 114 blockiert wird, dann ändert eine weitere Bewegung der Exzenterwelle 106 den Winkel β und damit den Winkel zwischen e1 und e2. Dadurch wird auch der Winkel γ beeinflusst, und die Schaltpunkte müssen entsprechend um -γ korrigiert werden.

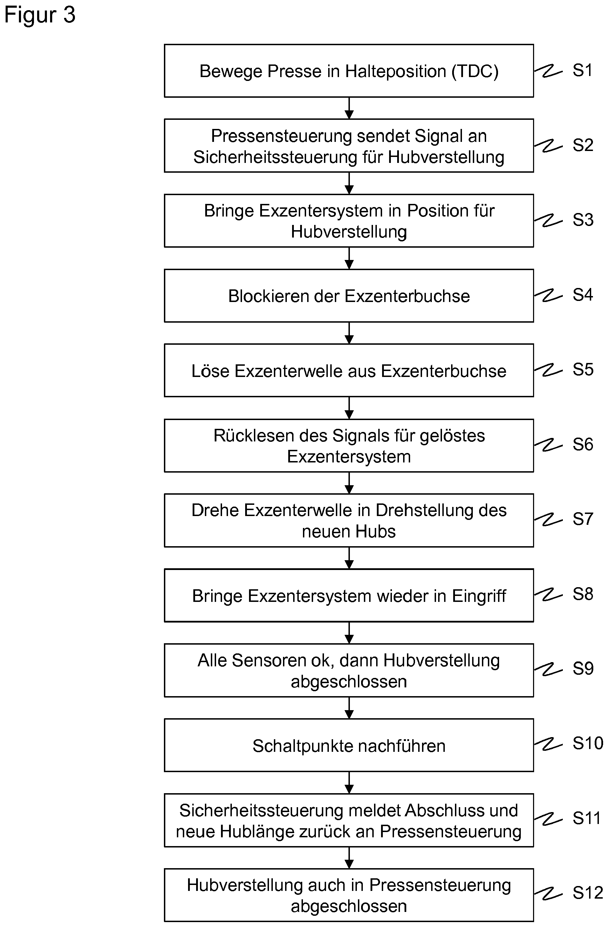

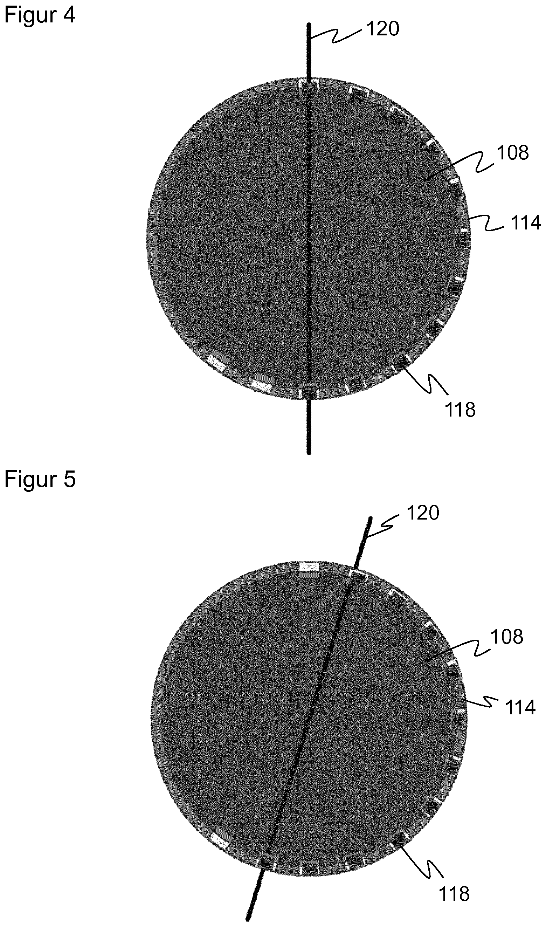

Figur 3 zeigt ein Ablaufdiagramm für das Verstellen der Hublänge und das Nachführen der Schaltpunkte. Dabei werden einzelne Schritte in den Figuren 4 bis 7 zusätzlich illustriert.

In einem Schritt S1 wird die Exzenterpresse 100 vorbereitend in die Ausgangsposition am oberen Totpunkt TDC gebracht. Für das nachfolgende Verfahren an sich ist das nicht zwingend erforderlich, aber Betrieb und Bewegung der Exzenterpresse 100 sollten unterbrochen sein.

In einem Schritt S2 sendet die Pressensteuerung 116 ein Signal an die Sicherheitssteuerung 10, mit der eine Hubverstellung angefordert wird, und möglicherweise eine Information der gewünschten neuen Hublänge. Die Sicherheitssteuerung 10 überwacht die Einhaltung der für die Hubverstellung definierten Prozessschritte beispielsweise mit einer internen Statusmaschine, mit deren Hilfe die Hubeinstellung ermittelt wird.

In einem Schritt S3 wird mittels der Pressensteuerung 116 das Exzentersystem 106 in eine Position verfahren, in der eine Hubverstellung möglich ist. Diese Position ist über die mechanische Konstruktion der Presse definiert und in der Sicherheitssteuerung hinterlegt. Es findet in der Sicherheitssteuerung ein Vergleich statt, ob die aktuelle Position der Exzenterwelle der gespeicherten Sollposition, d.h. der aktuellen Hublängenposition entspricht. Weiterhin wird geprüft, dass sich die Exzenterbuchse ebenfalls in der erwarteten Position beziehungsweise Stellung befindet.

In einem Schritt S4 wird die weitere Bewegung der Exzenterbuchse 114 blockiert, so dass sie ihre Position nicht mehr verändern kann. Dazu spricht die Sicherheitssteuerung 10 einen entsprechenden angeschlossenen Aktor an.

In einem Schritt S5 wird die Exzenterwelle 108 durch einen Steuerbefehl der Sicherheitssteuerung 10, vorzugsweise vermittelt durch die Pressensteuerung 116, an einen entsprechenden Pneumatikkreis der Exzenterpresse 100 von der Exzenterbuchse 114 gelöst. Der Exzentertrennüberwachungssensor 14 überwacht diesen Vorgang.

Die Trennung wird auch durch ein Rücklesen des Signals in einem Schritt S6 noch einmal geprüft.

In einem Schritt S7 wird nun die Exzenterwelle 108 gegen die Exzenterbuchse 114 verdreht. Das ist in den Figuren 4 und 5 an einem Beispiel verdeutlicht. Figur 4 zeigt die Ausgangssituation, Figur 5 die Situation nach Verstellen der Hublänge. Dargestellt sind jeweils übereinander die Exzenterwelle 108 und die Exzenterbuchse 114, wobei lediglich Kreise ohne Exzentrizität gezeichnet sind, um die Darstellung nicht zu überfrachten. Eine Anordnung 118 von Zähnen und Nuten sorgt für den Formschluss in dem Exzentersystem 106. Durch das Lösen in Schritt S5, der einem Anheben der Exzenterwelle 106 aus der Papierebene entspricht, wird der Eingriff der Zähne in die Nuten aufgehoben. Ein Durchmesser 120 soll die Verdrehung während der Hublängenverstellung verdeutlichen.

In der Ausgangssituation der Figur 4 wird eine ursprüngliche Hublängeneinstellung angenommen, bei welcher für die zu Figur 2 erläuterten Winkel γ = 0 und β = 0 gilt. Nach dem Verdrehen der Exzenterwelle im Schritt S7 ist die Exzenterwelle 108 in einer neuen Position gemäß Figur 5, wobei in diesem Beispiel die neuen Werte γ = 10° und β = 20° erreicht werden.

In einem Schritt S8 wird nach Erreichen der gewünschten Drehstellung das Exzentersystem 106 wieder in Eingriff gebracht. In Figur 5 wird folglich die Exzenterwelle 108 wieder in die Papierebene hinein abgesenkt, so dass in der Anordnung 118 die Zähne in die Nuten greifen.

Damit ist in einem Schritt S9 die Hubverstellung im Prinzip abgeschlossen. Voraussetzung dafür ist zum einen, dass die in dem Exzentersystem 106 erreichte Verdrehung einer zulässigen Hublängeneinstellung entspricht. Dazu muss in erste Linie der Formschluss in der Anordnung 118 möglich sein, wofür die Zähne so verdreht sein müssen, dass sie in die Nuten gleiten können, was ersichtlich nur in bestimmten diskreten Positionen mit einer kleinen Winkeltoleranz möglich ist. Die möglichen Hubpositionen sind beispielsweise in der Sicherheitssteuerung 10 als Konfiguration gespeichert. Bei einer alternativen stufenlosen Hublängenverstellung ohne die Anordnung 118 beispielsweise mit einem Kraftschluss anstelle des Formschlusses entfällt diese Prüfung.

Außerdem sollte einerseits der Exzentertrennüberwachungssensor 14 genau zwischen den Schritten S5 bis S8 gemeldet haben, dass die Exzenterwelle 108 außer Eingriff mit der Exzenterbuchse 114 war. Andererseits muss die Exzenterbuchse 114 ihre Position gehalten haben, sich also nicht trotz Blockierung verdreht haben. Das wird durch Auswertung der Signale des Positionsüberwachungssensors 16 sichergestellt. Ist nun die gewünschte Position des Exzentersystems 106 erreicht und melden alle Sensoren 12, 14, 16, dass der Verstellvorgang zulässig war und den Sicherheitsvorgaben gemäß abgelaufen ist, so kann die neue Hublänge aktiviert werden.

Zuvor werden allerdings in einem Schritt S10 noch die Schaltpunkte des "virtuellen Nockenschaltwerks" nachgeführt. Wie bereits erläutert, ist die Sicherheitssteuerung 10 in der Lage, an bestimmten Punkten im Pressenzyklus auf Basis der von dem Absolutdrehgeber 12 gemessenen Drehstellung der Exzenterwelle 106 ein jeweiliges Schaltsignal auszugeben, wie an dem unteren Totpunkt BDC, dem oberen Totpunkt TDC und einem Nachlaufpunkt SCC. Diese Schaltpunkte sind durch das Verstellen der Hublänge verschoben.

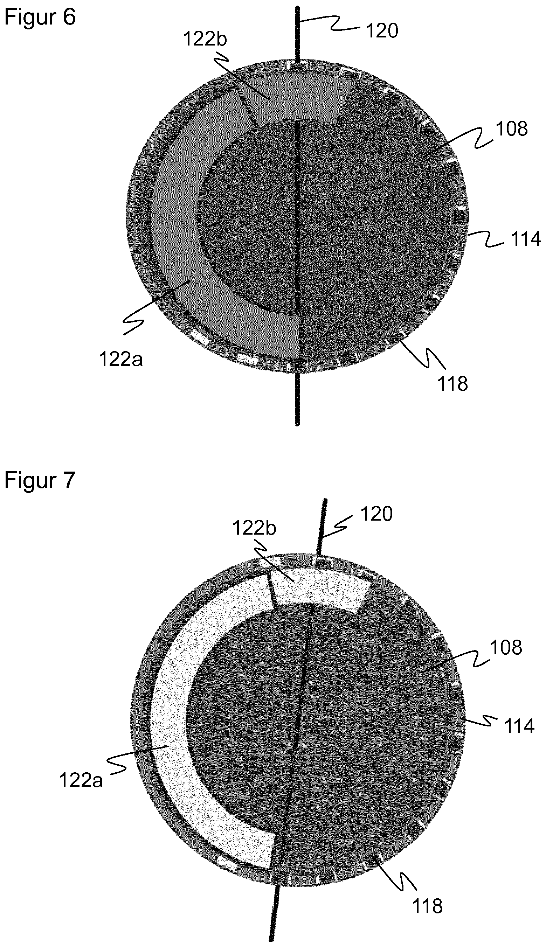

Die Figuren 6 und 7 illustrieren das Nachführen der Schaltpunkte. Die Darstellungen entsprechen den Figuren 4 und 5, d.h. einer Ausgangssituation und der Situation nach dem Verstellen der Hublänge. Zusätzlich eingezeichnet sind jeweils virtuelle Nocken 122a-b, die wiederum lediglich eine besondere Art der Illustration der in der Sicherheitssteuerung hinterlegten Schaltpunkte sind.

In der Ausgangssituation der Figur 6 liegt der untere Totpunkt BDC bei 180°, der obere Totpunkt TDC bei 335° und der Nachlaufpunkt SCC bei 15°. Nach dem Verstellen der Hublänge in der Situation gemäß Figur 7 haben sich die Schaltpunkte um den Winkel γ verschoben, so dass eine Korrektur um - γ erforderlich ist. Da Figur 6 die Ausgangssituation ist, auf die Bezug genommen wird, ist hier γ=- γ=0. Dagegen muss in der Situation gemäß Figur 7 eine Korrektur um -γ = -10° erfolgen.

Die erforderlichen Korrekturwinkel γ in Abhängigkeit von dem mittels Absolutdrehgeber gemessenen Winkel β sind in der Sicherheitssteuerung 10 als Parameter hinterlegt und werden dann in der sicheren Applikationssoftware nach einem erfolgreichen Verstellvorgang aktiviert. Die numerischen Werte der Korrekturwinkel und die zulässigen Verstellwinkel β hängen von der jeweiligen Exzenterpresse 100 ab. Sie werden vorzugsweise vom Hersteller der Exzenterpresse 100 vorgegeben. Alternativ es auch möglich, dies aus der Geometrie des Exzentersystems 106 zu berechnen oder die Korrekturwinkel einmalig durch händisches Einlernen zu bestimmen. Prinzipiell könnte eine Rechenvorschrift auch in der Sicherheitssteuerung 10 implementiert sein, aber der Aufwand steht meist angesichts der überschaubaren Anzahl von möglichen Hublängen in keinem Verhältnis zum Nutzen

Mit dem Nachführen der Schaltpunkte ist das Verfahren abgeschlossen. Dies meldet die Sicherheitssteuerung 10 in einem Schritt S11 an die Pressensteuerung 116 zurück, wobei auch die neue Hublänge nochmals übergeben werden kann. Die Pressensteuerung 116 kann eine weitere Plausibilisierung der Informationen vornehmen.

Damit ist der Vorgang in einem Schritt S12 auch für die Pressensteuerung 116 abgeschlossen, und die Exzenterpresse 100 kann ihren Betrieb mit der neuen Hublänge aufnehmen.

Die geschilderte Aufgabenverteilung zwischen Sicherheitssteuerung 10 und Pressensteuerung 116 ist vorteilhaft, weil die Sicherheitssteuerung speziell für die Sicherheitsaspekte zuständig und dafür entsprechend ausgelegt ist, etwa durch Redundanzen, zweikanalige Ausführung und Selbsttest gegen Ausfälle und Fehler. Dennoch können die Aufgaben auch anders verteilt und beispielsweise alle Funktionen in eine dann entsprechend sichere Pressensteuerung 116 verlegt werden.

Weiterhin sind nicht alle Schritte zwingend in dieser Form und Reihenfolge erforderlich. Beispielweise kann der Exzenterbuchse 114 eine Bewegung zugestanden werden, statt sie im Schritt S4 zu blockieren, wobei dann die Drehung sicher überwacht und berücksichtigt wird. Ein Überprüfen, ob eine Drehstellung für das Exzentersystem zulässig ist, entfällt bei einer stufenlosen Hubverstellung. Das Nachführen der Schaltpunkte wurde im Schritt S10 nach Abschluss der Hubverstellung beschrieben, kann aber auch zeitgleich oder vorab erfolgen, wobei im letzteren Fall natürlich die neuen Schaltpunkte erst gültig werden, wenn die Hublänge tatsächlich erfolgreich eingestellt wurde.

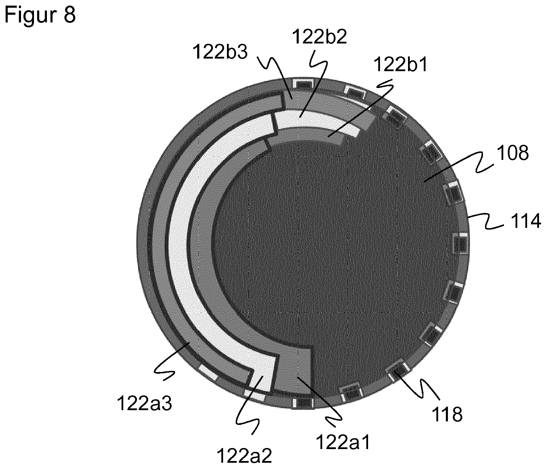

Figur 8 zeigt nochmals in einer Darstellung ähnlich Figur 6 oder 7 die Schaltpunkte für drei unterschiedliche Hublängen. Die Schaltpunkte werden wiederum durch virtuelle Nocken 122a1...122b3 illustriert. Aus dieser Darstellung lässt sich ableiten, wie auch eine größere Anzahl unterschiedlicher Hublängen verarbeitet werden kann.

## Patentansprüche

1. Steuerungsvorrichtung (10) zum Verstellen der Hublänge einer Exzenterpresse (100), wobei die Exzenterpresse (100) einen Stößel (102) aufweist, der über eine Pleuelstange (104) von einem Exzentersystem (106) angetrieben wird, das eine Exzenterwelle (108) und eine Exzenterbuchse (114) umfasst, die zum Verstellen der Hublänge voneinander lösbar und dann gegeneinander verdrehbar sind,
wobei die Steuerungsvorrichtung (10) einen Encoder (12) zum Bestimmen der Drehstellung der Exzenterwelle (108) aufweist, **dadurch gekennzeichnet, dass** die Steuerungsvorrichtung (10) sicher ist und dafür ausgebildet ist, bei mindestens einer ersten Drehstellung ein erstes Schaltsignal zu erzeugen und bei einem Verstellen der Hublänge die erste Drehstellung automatisch nachzuführen, um das erste Schaltsignal nicht über ein mechanisches Nockenschaltwerk, sondern elektronisch auf Basis der von dem Encoder (12) gemessenen Drehstellung zu erzeugen.

2. Steuerungsvorrichtung (10) nach Anspruch 1,
wobei die Steuerungsvorrichtung (10) dafür ausgebildet ist, das erste Schaltsignal an einem unteren Totpunkt und ein zweites Schaltsignal bei einer zweiten Drehstellung an einem oberen Totpunkt der Exzenterpresse (100) zu erzeugen.

3. Steuerungsvorrichtung (10) nach Anspruch 2,
wobei die Steuerungsvorrichtung (10) dafür ausgebildet ist, ein drittes Schaltsignal bei einer dritten Drehstellung an einem Nachlaufpunkt zu erzeugen.

4. Steuerungsvorrichtung (10) nach Anspruch 2 oder 3,
wobei die Steuerungsvorrichtung (10) dafür ausgebildet ist, die Drehstellungen relativ zueinander zu bestimmen.

5. Steuerungsvorrichtung (10) nach einem der vorhergehenden Ansprüche,
wobei die Steuerungsvorrichtung (10) eine Tabelle oder eine Rechenvorschrift aufweist, die möglichen Winkeln, die Exzenterwelle (108) und Exzenterbuchse (114) zueinander zum Verstellen der Hublänge einnehmen können, einen jeweiligen Korrekturwinkel (γ) für die erste Drehstellung zuordnet.

6. Steuerungsvorrichtung (10) nach einem der vorhergehenden Ansprüche, wobei der Encoder (12) als sicherer Absolutdrehgeber ausgebildet ist.

7. Steuerungsvorrichtung (10) nach einem der vorhergehenden Ansprüche, die einen Positionsüberwachungssensor (16) für die Exzenterbuchse (114) aufweist.

8. Steuerungsvorrichtung (10) nach Anspruch 7,
wobei der Positionsüberwachungssensor (14) als Sicherheitspositionsschalter ausgebildet ist, welcher ein Blockieren der Exzenterbuchse (114) erkennt.

9. Steuerungsvorrichtung (10) nach einem der vorhergehenden Ansprüche,
die einen Exzentertrennüberwachungssensor (14) aufweist, der erkennt, ob Exzenterwelle (108) und Exzenterbuchse (114) voneinander gelöst sind oder nicht.

10. Steuerungsvorrichtung (10) nach einem der vorhergehenden Ansprüche,
wobei die Steuerungsvorrichtung (10) dafür ausgebildet ist zu erkennen, ob ein beim Verstellen gewählter Winkel zwischen Exzenterwelle (108) und Exzenterbuchse (114) zulässig ist.

11. Steuerungsvorrichtung (10) nach einem der vorhergehenden Ansprüche,
wobei die Steuerungsvorrichtung (10) dafür ausgebildet ist, die Hublänge automatisch zu verstellen.

12. Verfahren zum sicheren Verstellen der Hublänge einer Exzenterpresse (102), die einen Stößel (102) aufweist, der über eine Pleuelstange (104) von einem Exzentersystem (106) angetrieben wird, das eine Exzenterwelle (108) und eine Exzenterbuchse (114) umfasst, die zum Verstellen der Hublänge voneinander gelöst und gegeneinander verdreht werden, wobei im Betrieb jeweils bei Erreichen mindestens einer ersten Drehstellung ein Schaltsignal erzeugt wird, wobei die Drehstellung der Exzenterwelle (108) mit einem Encoder (12) bestimmt und bei einem Verstellen der Hublänge die erste Drehstellung automatisch nachgeführt wird,
**dadurch gekennzeichnet,**
**dass** die Drehstellung der Exzenterwelle (108) auch im Betrieb mit dem Encoder (12) bestimmt und das erste Schaltsignal nicht über ein mechanisches Nockenschaltwerk, sondern elektronisch auf Basis der von dem Encoder (12) gemessenen Drehstellung erzeugt wird.

13. Verfahren nach Anspruch 12,
wobei zum automatischen Verstellen der Hublänge eine gewünschte Hublänge vorgegeben und daraufhin die Exzenterwelle (108) in dem erforderlichen Winkel (γ) gegen die Exzenterbuchse (114) verdreht wird.

14. Verfahren nach Anspruch 12 oder 13,
wobei die Exzenterpresse (100) zunächst in eine für das Verstellen der Hublänge geeignete Position bewegt wird.

15. Verfahren nach einem der Ansprüche 12 bis 14,
wobei die Exzenterwelle (108) aus der Exzenterbuchse (114) gelöst und die Exzenterbuchse (114) blockiert wird, dann die Exzenterpresse (100) angetrieben wird, bis die Exzenterwelle (108) in dem erforderlichen Winkel gegen die Exzenterbuchse (114) verdreht ist, und anschließend die Exzenterwelle (108) wieder mit der Exzenterbuchse (114) verbunden wird.

## Claims

1. A control device (10) for adjusting the stroke length of an eccentric press (100), wherein the eccentric press (100) has a plunger (102) which is driven via a connecting rod (104) by an eccentric system (106) comprising an eccentric shaft (108) and an eccentric bushing (114) which can be detached from one another and then rotated relative to one another to adjust the stroke length,
wherein the control device (10) comprises an encoder (12) for determining the rotational position of the eccentric shaft (108),
**characterized in that** the control device (10) is safe and is configured to generate a first switching signal at at least one first rotational position and to automatically readjust the first rotational position when the stroke length is adjusted in order to generate the first switching signal not via a mechanical cam group but electronically based on the rotational position measured by the encoder (12).

2. The control device (10) according to claim 1,
wherein the control device (10) is configured to generate the first switching signal at a bottom dead center and a second switching signal at a second rotational position at a top dead center of the eccentric press (100).

3. The control device (10) according to claim 2,
wherein the control device (10) is configured to generate a third switching signal at a third rotational position at a tracking point.

4. The control device (10) according to claim 2 or 3,
wherein the control device (10) is configured to determine the rotational positions relative to each other.

5. The control device (10) according to any of the preceding claims,
wherein the control device (10) comprises a table or a calculation rule which assigns a respective correction angle (γ) for the first rotational position to possible angles which the eccentric shaft (108) and eccentric bushing (114) can assume relative to one another for adjusting the stroke length.

6. The control device (10) according to any of the preceding claims,
wherein the encoder (12) is configured as a safe absolute encoder.

7. The control device (10) according to any of the preceding claims,
which comprises a position monitoring sensor (16) for the eccentric bushing (114).

8. The control device (10) according to claim 7,
wherein the position monitoring sensor (14) is configured as a safety position switch which detects a blocking of the eccentric bushing (114).

9. The control device (10) according to any of the preceding claims,
which comprises an eccentric separation monitoring sensor (14) which detects whether or not the eccentric shaft (108) and eccentric bushing (114) are separated from one another.

10. The control device (10) according to any of the preceding claims,
wherein the control device (10) is configured to detect whether an angle between the eccentric shaft (108) and the eccentric bushing (114) selected during the adjustment is permissible.

11. The control device (10) according to any of the preceding claims,
wherein the control device (10) is configured to automatically adjust the stroke length.

12. A method for safely adjusting the stroke length of an eccentric press (102) having a plunger (102) driven via a connecting rod (104) by an eccentric system (106) comprising an eccentric shaft (108) and an eccentric bushing (114) which are detached from one another and rotated relative to one another to adjust the stroke length, wherein during operation a switching signal is generated each time at least one first rotary position is reached, wherein the rotary position of the eccentric shaft (108) is determined by means of an encoder (12) and the first rotary position is automatically readjusted when the stroke length is adjusted,
**characterized in that** the rotational position of the eccentric shaft (108) is also determined with the encoder (12) during operation and the first switching signal is not generated via a mechanical cam group but electronically on the basis of the rotational position measured by the encoder (12).

13. The method according to claim 12,
wherein for automatic adjustment of the stroke length a desired stroke length is preset and then the eccentric shaft (108) is rotated at the required angle (γ) against the eccentric bushing (114).

14. The method according to claim 12 or 13,
wherein the eccentric press (100) is first moved into a position suitable for adjusting the stroke length.

15. The method according to one of claims 12 to 14,
wherein the eccentric shaft (108) is released from the eccentric bushing (114) and the eccentric bushing (114) is blocked, then the eccentric press (100) is driven until the eccentric shaft (108) is rotated at the required angle against the eccentric bushing (114), and then the eccentric shaft (108) is reconnected to the eccentric bushing (114).

## Revendications

1. Dispositif de commande (10) pour le réglage de la longueur de course d'une presse à excentrique (100), la presse à excentrique (100) comportant un coulisseau (102) qui est entraîné par l'intermédiaire d'une bielle (104) par un système d'excentrique (106) comprenant un arbre d'excentrique (108) et une douille d'excentrique (114) qui peuvent être détachés l'un de l'autre et ensuite tournés l'un par rapport à l'autre, afin de régler la longueur de course,
le dispositif de commande (10) comportant un codeur (12) pour déterminer la position de rotation de l'arbre d'excentrique (108),
**caractérisé en ce que**
le dispositif de commande (10) est sécurisé et est réalisé pour générer un premier signal de commutation dans au moins une première position de rotation et pour faire suivre automatiquement la première position de rotation lors d'un réglage de la longueur de course, pour générer le premier signal de commutation non pas via un commutateur à cames mécanique, mais électroniquement sur la base de la position de rotation mesurée par le codeur (12).

2. Dispositif de commande (10) selon la revendication 1,
dans lequel le dispositif de commande (10) est réalisé pour générer le premier signal de commutation à un point mort bas et pour générer un second signal de commutation à une seconde position de rotation à un point mort haut de la presse à excentrique (100).

3. Dispositif de commande (10) selon la revendication 2,
dans lequel le dispositif de commande (10) est réalisé pour générer un troisième signal de commutation à une troisième position de rotation à un point de suivie.

4. Dispositif de commande (10) selon la revendication 2 ou 3,
dans lequel le dispositif de commande (10) est réalisé pour déterminer les positions de rotation les unes par rapport aux autres.

5. Dispositif de commande (10) selon l'une des revendications précédentes, dans lequel le dispositif de commande (10) comprend un tableau ou une règle de calcul qui attribue un angle de correction respectif (y) pour la première position de rotation aux angles possibles que l'arbre d'excentrique (108) et la douille d'excentrique (114) peuvent prendre l'un par rapport à l'autre pour le réglage de la longueur de course.

6. Dispositif de commande (10) selon l'une des revendications précédentes, dans lequel le codeur (12) est réalisé comme un codeur absolu sécurisé.

7. Dispositif de commande (10) selon l'une des revendications précédentes, comportant un capteur de surveillance de position (16) pour la douille d'excentrique (114).

8. Dispositif de commande (10) selon la revendication 7,
dans lequel le capteur de surveillance de position (14) est réalisé comme un interrupteur de position de sécurité qui reconnaît un blocage de la douille d'excentrique (114).

9. Dispositif de commande (10) selon l'une des revendications précédentes, comportant un capteur de surveillance de séparation d'excentrique (14) qui reconnaît si l'arbre d'excentrique (108) et la douille d'excentrique (114) sont ou ne sont pas détachés l'un de l'autre.

10. Dispositif de commande (10) selon l'une des revendications précédentes, dans lequel le dispositif de commande (10) est réalisé pour reconnaître si un angle entre l'arbre d'excentrique (108) et la douille d'excentrique (114), sélectionné lors du réglage, est admissible.

11. Dispositif de commande (10) selon l'une des revendications précédentes, dans lequel le dispositif de commande (10) est réalisé pour régler automatiquement la longueur de course.

12. Procédé pour le réglage sécurisé de la longueur de course d'une presse à excentrique (102) comportant un coulisseau (102) qui est entraîné par l'intermédiaire d'une bielle (104) par un système d'excentrique (106) comprenant un arbre d'excentrique (108) et une douille d'excentrique (114) qui peuvent être détachés l'un de l'autre et tournés l'un par rapport à l'autre, afin de régler la longueur de course,
dans lequel lors du fonctionnement, lorsqu'au moins une première position de rotation est atteinte, un signal de commutation respectif est généré, la position de rotation de l'arbre d'excentrique (108) est déterminée à l'aide d'un codeur (12), et
lors d'un réglage de la longueur de course, on fait suivre automatiquement la première position de rotation,
**caractérisé en ce que**
la position de rotation de l'arbre d'excentrique (108) est déterminée à l'aide du codeur (12) également pendant le fonctionnement, et le premier signal de commutation est généré non pas via un commutateur à cames mécanique, mais électroniquement sur la base de la position de rotation mesurée par le codeur (12).

13. Procédé selon la revendication 12,
dans lequel pour le réglage automatique de la longueur de course, une longueur de course désirée est définie et ensuite l'arbre d'excentrique (108) est tourné par rapport à la douille d'excentrique (114) selon l'angle requis (γ).

14. Procédé selon la revendication 12 ou 13,
dans lequel la presse à excentrique (100) est tout d'abord déplacée jusque dans une position appropriée pour le réglage de la longueur de course.

15. Procédé selon l'une des revendications 12 à 14,
dans lequel l'arbre d'excentrique (108) est détaché hors de la douille d'excentrique (114) et la douille d'excentrique (114) est bloquée, puis la presse à excentrique (100) est entraînée jusqu'à ce que l'arbre d'excentrique (108) soit tourné de l'angle requis par rapport à la douille d'excentrique (114), et ensuite l'arbre d'excentrique (108) est de nouveau relié à la douille d'excentrique (114).
